# EUROPEAN PATENT APPLICATION

(11) **EP 3 336 933 A1**
(43) Date of publication of application: **20.06.2018**
(21) Application number: 16203919.2
(22) Date of filing: 14.12.2016
(51) Int. Cl.: H01M 2/34, H01M 10/42, H01M 10/48

(54) **SYSTEM AND METHOD FOR OPERATING A RECHARGEABLE BATTERY UNIT AND RECHARGEABLE BATTERY UNIT**

(71) Applicant: Lithium Energy and Power GmbH & Co. KG, 70469 Stuttgart (DE)
(72) Inventor: Ohmer, Nils, 70569 Stuttgart (DE)
(74) Representative: Bee, Joachim

(57) **Abstract**

The invention relates to a system (1) for operating a rechargeable battery unit (2) of a hybrid electric vehicle or electric vehicle, said rechargeable battery unit (2) having at least one battery cell (3), comprising: at least one current path establishing device (10), when activated, being capable of establishing at least one additional current path (P1,..., Pn) between electrodes of the battery cell (3) inside of this battery cell (3); and at least one detection unit capable of detecting, if a short circuit exists in the battery cell (3) and/or if the vehicle has an accident at which the battery cell (3) will be in the impact zone of the crash and/or if the battery cell (3) is overcharged and/or if the battery cell (3) is externally short circuited and/or if another failure cause able to lead to an unsafe situation of the battery cell (3) exists, and of activating the current path establishing device (10) upon detection that a short circuit does exist in the battery cell (3) and/or that the vehicle does have an accident at which the battery cell (3) will be in the impact zone of the crash and/or if the battery cell (3) is overcharged and/or if the battery cell (3) is externally short circuited and/or if another failure cause able to lead to an unsafe situation of the battery cell (3) exists.

## Description

### Prior Art

The invention relates to a system and a method for operating a rechargeable battery unit of a hybrid electric vehicle or electric vehicle, said rechargeable battery unit having at least one battery cell.

Further, the invention relates to a rechargeable battery unit of a hybrid electric vehicle or electric vehicle, said rechargeable battery unit having at least one battery cell.

Recently, battery cells like lithium ion cells are used in different applications. For example, battery cells are used for supplying electric drive units of motor vehicles like electric vehicles and hybrid electric vehicles with electric power. Such a battery cell may be a jelly roll battery cell having an insulating sheet, a thin anode layer on said insulation sheet, a separator layer on said anode layer, and a thin cathode layer on said separator layer, all together being rolled up and inserted into a cell casing. Generally, several battery cells are combined to form a rechargeable battery unit with the battery cells being connected in series or in parallel.

A short circuit may occur in a battery cell if, for example, a mechanical load is applied to the battery cell. The short circuit is established by a current path between the electrodes of the battery cell. A large short circuit current flows through the current path and locally generates heat in the battery cell causing a local overheating of the battery cell. The overheating may lead to a chain of chemical reactions, including the exothermal oxidative reaction between cathode and electrolyte, generating gas and more heat inside the cell casing. The generated heat leads to an expansion of the reaction zone and the pressure inside the cell casing increases due to the gas generation. This chain of events leads to and is referred to as thermal runaway of a battery cell, possibly leading to venting, fire and/or explosion of the battery cell. A thermal runaway of one battery cell of a rechargeable battery unit with several battery cells may lead to a thermal runaway of further battery cells of the rechargeable battery unit. To prevent explosion of a battery cell in case of a thermal runaway, a battery cell comprises at least one venting device for venting the cell casing and thereby reducing the pressure inside the cell casing in case of a thermal runaway.

It is known to bring a battery cell, having a shut-down functionalized separator, into a safe state in case of a short circuit inside of the battery cell, by an external fast discharge device, to prevent the cell from going into thermal run. The external short circuit can reduce the short circuit current through the internal short circuit and therefore the local heat generation inside of the battery cell. The fast discharge device is activated when a short circuit in the battery cell is detected. The external short circuit leads to a more homogeneous heat up of the cell, leading to a more homogeneous shut-down of the separator, preventing ion transport through the electrolyte, preventing electronic current flow, preventing further heating and the cell from thermal runaway.

### Disclosure of the invention

It is an object of the present invention to heat a shut-down functionalized separator of a battery cell more uniformly when a short circuit, a crash/crush, an overcharge, an external short circuit or other failure cause able to lead to an unsafe situation of the battery cell, especially a thermal runaway, does exist inside of the battery cell.

This object is solved by the independent claims. Advantageous embodiments are disclosed in the following description, the dependent claims and the drawings, wherein these embodiments either by taken alone or in any combination with each other may relate to a preferred or advantageous aspect of the invention. Embodiments of the system may be embodiments of the method and vice versa, even if this is not explicitly disclosed in the following.

A system according to the invention for operating a rechargeable battery unit of a hybrid electric vehicle or electric vehicle, said rechargeable battery unit having at least one battery cell, comprises at least one current path establishing device, when activated, being capable of establishing at least one additional current path between electrodes of the battery cell inside of this battery cell. The system further comprises at least one detection unit capable of detecting, if a short circuit exists in the battery cell and/or if the vehicle has an accident at which the battery cell will be in the impact zone of the crash and/or if the battery cell is overcharged and/or if the battery cell is externally short circuited and/or if another failure cause able to lead to an unsafe situation of the battery cell exists, and of activating the current path establishing device upon detection that a short circuit does exist in the battery cell and/or that the vehicle does have an accident at which the battery cell will be in the impact zone of the crash and/or if the battery cell is overcharged and/or if the battery cell is externally short circuited and/or if another failure cause able to lead to an unsafe situation of the battery cell exists.

According to the invention at least one additional current path is established between the electrodes of this battery cell inside the battery cell if is detected that a short circuit does exist in the battery cell and/or if the vehicle has an accident at which the battery cell will be in the impact zone of the crash and/or if the battery cell is overcharged and/or if the battery cell is externally short circuited and/or if another failure cause able to lead to an unsafe situation of the battery cell exists. Preferably, two, three or more a plurality of current paths is established between the electrodes of the battery cell inside of the battery cell. Through this, the overall short circuit current flowing between the electrodes of the battery cell is distributed over the possibly initial short circuit current path and the, at least one, additional current path. Therefore, the current density through the respective current path and hence the local heating can be reduced. The more additional current paths are established between the electrodes of the battery cell inside of the battery cell, the lower are the current densities at the respective current paths. By providing more than one current path between the electrodes of the battery cell, heat is generated at more than one current path, leading to a more uniform heating of the separator of the battery cell. Therefore, the heat generation can be distributed over the battery cell more uniformly. Thus, the invention makes it possible to heat a shut-down separator of a battery cell more uniformly when a short circuit does exist inside of the battery cell and/or if the vehicle has an accident at which the battery cell will be in the impact zone of the crash and/or if the battery cell is overcharged and/or if the battery cell is externally short circuited and/or if another failure cause able to lead to an unsafe situation of the battery cell exists, bringing the separator homogeneously into shutdown and the cell into a safe state. The invention establishes a real safe cell, since safety is given on the cell level.

The current path establishing device can be a device mechanically, thermally, electrically or magnetically acting on the respective battery cell in case of a short circuit between the electrodes of the battery cell and/or if the vehicle has an accident at which the battery cell will be in the impact zone of the crash and/or if the battery cell is overcharged and/or if the battery cell is externally short circuited and/or if another failure cause able to lead to an unsafe situation of the battery cell exists. When activated, the current path establishing device may apply a mechanical load to the battery cell. The current path establishing device can be located inside or outside of the battery cell. The current path establishing device can simultaneously act on one, two or more battery cells of the rechargeable battery unit. Preferably, each battery cell is combined with its own current path establishing device.

The detection unit can be implemented by an electronic device of the rechargeable battery unit or can be a separate device or can be integrated in or be part of the battery cell. For detecting if a short circuit does or does not exist in the battery cell and/or if the battery cell is overcharged and/or if the battery cell is externally short circuited and/or if another failure cause able to lead to an unsafe situation of the battery cell exists, the detection unit may comprise at least one sensor, for example a voltage sensor, a current sensor, a power sensor, a temperature sensor, a force sensor or the like, generating sensor signals. The sensor signals may be processed by a logical unit, driving the actuation of the device, or directly drive the device. For detecting if the vehicle has an accident at which the battery cell will be in the impact zone of the crash, the detection unit may comprise at least one crash sensor, for example a mechanical impact sensor arranged at the body of the vehicle, generating sensor signals. Alternatively, the detection unit may be electrically connected to vehicle electronics to receive signals from said vehicle electronics, which indicate the present state of the vehicle. The detection unit may be capable of deriving from said signals, if the vehicle does or does not have an accident at which the battery cell will be in the impact zone of the crash. In case the vehicle has an accident,
the system according to the invention may be designed to establish additional current paths in all battery cells of the rechargeable battery or in a subset (e.g. a module) to bring the battery cells in a safe state. If a battery cell in such a safe state is mechanically damaged, for example penetrated by an object, the short circuit current flowing through a current path established by said damage is smaller ab initio, and short circuit heat is distributed over the current paths to more uniformly heat the separator of the battery cell. The detection unit can be arranged inside of one of the battery cells or outside of the battery cells.

According to the invention at least two short circuit current paths (initial current path and at least one additional current path) are established between the electrodes of the battery cell inside the battery cell, when an initial short circuit occurs in the battery cell. Compared to the conventional case with only one current path between the electrodes of a battery cell, a larger overall short circuit current can initially flow between the electrodes, but for a shorter time. Moreover, by establishing at least two current paths between electrodes of a battery cell, a lower local electron current is given during depolarization of the electrochemical double layers and lithium (de)intercalation inside of the battery cells electrodes.

Furthermore, according to the present invention, lower contact resistances may be given compared the case using a conventional external fast discharge device, since a direct contact between the electrodes of a battery cell is established by the present invention. This further reduces the heat generation in the battery cell when a short circuit occurs in the battery cell and/or if the vehicle has an accident at which the battery cell will be in the impact zone of the crash and/or if the battery cell is overcharged and/or if the battery cell is externally short circuited and/or if another failure cause able to lead to an unsafe situation of the battery cell exists. Furthermore, with the present invention, it may be possible to provide a fast discharge and fast shut-down of the separator, respectively, also for e.g. > 75 Ah battery cells by increasing the number of additional internal short circuits.

Further, the invention makes it possible to reduce an overall separator shut-down time. A separator of a battery cell can stop an ion exchange inside of the battery cell, when the temperature of the separator reaches a predetermined shut-down temperature. When the shut-down temperature is reached, e.g. polyethylene is fused and the fused polyethylene closes ion exchange pores of the separator, so that the ion exchange is stopped. By the uniform heat generation according to the invention, the separator and the electrolyte are heated more uniformly, so that pores distributed over the entire separator area are earlier closed than in a case where only one current path is established between the electrodes and heat is generated locally only at one specific location. This reduces the separator shut-down time that is needed to fully or nearly fully stop the ion transport within the separator, even in comparison with using the external fast discharge device.

Since due to the additional cell internal current paths according to the invention, the overall length electrons have to travel between the different electrodes during the shut down operation is shorter than is obtained with a single further external current path of a conventional fast discharge device, less additional Joule heating (*H∝I².R.t*) is given. This results in less problems in case of an internal short circuit and/or if the vehicle has an accident at which the battery cell will be in the impact zone of the crash and/or if the battery cell is overcharged and/or if the battery cell is externally short circuited and/or if another failure cause able to lead to an unsafe situation of the battery cell exists or an "only-device" operation of the system. Shorter current paths are particularly important for battery cells with higher capacity (e.g. > 75 Ah) since *H∝I².*

The system according to the invention can potentially be realized cheaper than a conventional external fast discharge device, because no high current electronics and components (e.g. FET, nanofoil, etc.) are necessary. Moreover, the current path establishing device can be realized with plastic components, which are cheaper than metal components, since a direct contact of the electrodes, established by the current path establishing device, is sufficient to create an additional current path. The additional current path does not have to be realized by components of the current path establishing device, but can be.

The system according to the invention may provide a protection against overheating, if the current path establishing device is activated, for example, at 60°C. The system according to the invention can also offer protection, if there is a crack in the separator of a battery cell, causing an internal short circuit between electrodes of the battery cell. If the separator has a crack, possibly higher Joule heating occurs compared to a single current path established by a particle between the two electrodes. Further, a system according to the invention can also offer protection during a crash/crush, since a battery cell can be safely and faster brought into shut-down than with a conventional external fast discharge device due to the lower resistances and more homogeneous heat distribution, with possibly even lower overall heat production due to less Joule heating. Furthermore can the device be used to protect the cell from various other hazardous consequences originating e.g. from overcharge or external short circuit.

With the invention, no problems are due to additional external heating of a battery cell, like it is possible in the case of a conventional external fast discharge device.

Additionally, the functionality of the system according to the invention is still maintained even if cell connectors are loose and/or current collector-terminal contacts are lost or aged and/or at various other failure causes leading to an increased overall external current path resistance e.g. following from a crash situation. Especially, once the device is triggered the homogeneous heat up of the shut-down functionalized separator and the battery cell will not be able to be interrupted anymore, as it might be the case for a conventional external fast discharge device in a crash situation.

The invention may work without the need for chemical countermeasures for high capacity battery cells. The system according to the invention may also permanently bridge the battery cell by itself, what is important at the unit level, so that the rechargeable battery unit still works, when the current path establishing device is activated to allow further driving of the vehicle.

According to an advantageous embodiment the detection device is capable of monitoring a cell voltage of the battery cell and is capable of activating the current path establishing device upon detection of a predetermined voltage drop, indicating that a short circuit does exist in the battery cell. The detection device can be arranged inside or outside of a battery cell and can be electrically connected to electrodes of the battery cell.

According to a further advantageous embodiment the current path establishing device comprises at least one pin-shaped element being pressed against or at least partly penetrating the battery cell when the current path establishing device is activated. The pin-shaped element can be made of metal or plastic. The pin-shaped element can be a nail or the like. By pressing the pin-shaped element against the battery cell, the separator located between electrodes of the battery cell may crack, so that the electrodes directly contact each other in the area of the crack to establish an additional current path between the electrodes. Further, if the pin-shaped element penetrates the battery cell, the electrodes directly contact each other or are indirectly connected with each other by the current path establishing device. If the pin-shaped element penetrates the battery cell, a hole is formed in the cell casing. This hole may serve as a safety vent for reducing pressure inside of the cell casing. Preferably, the current path establishing device comprises one, two or a plurality of pin-shaped elements. The pin-shaped elements may protrude from one side of a thin plate that can be arranged inside or outside of the cell casing of the battery cell.

According to a further advantageous embodiment pin-shaped element is telescopable, so that a length of the pin-shaped element is greater when the current path establishing device is activated than that when the current path establishing device is not activated. If the current path establishing device is not activated the pin-shaped element is retracted, and if the current path establishing device is activated the pin-shaped element is extended. The pin-shaped element has a space-saving shape, when it is retracted. The pin-shaped element can have two, three, four or more components being slidably guided relatively to each other to make the pin-shaped element telescopable.

According to a further advantageous embodiment the current path establishing device comprises at least one cutting device for cutting or compressing a part of the battery cell when the current path establishing device is activated. The cutting device can have two knifes, at least one of them being movable in the direction of the respective other knife. By cutting a part of the battery cell, the electrodes of the battery cell are cut and contact each other along the cutting line, thereby forming a relatively long contact area between the electrodes. By compressing, i.e. pressing towards each other, a part of the battery cell, the separator between the electrodes of the battery cell may crack and the electrodes contact each other in the area of the crack, thereby forming a relatively long contact area between the electrodes. Due to the long contact area between the electrodes of the battery cell, short circuit heat generation is distributed along the contact area, i.e. more uniformly distributed over the separator located between the electrodes.

According to a further advantageous embodiment the current path establishing device comprises at least one pre-stressed spring element having a spikey free end and being released when the current path establishing device is activated. The current path establishing device may comprise a release mechanism for blocking and releasing the pre-stressed spring element. If released, the spikey free end of the spring element moves in the direction of the electrodes of the battery cell. The battery cell or rather its electrodes are penetrated or compressed, i.e. pressed towards each other, by the spikey free end of the spring element to establish an additional current path. When the electrodes are compressed with the pre-stressed spring element, the separator between electrodes of the battery cell may crack, allowing the additional current path between the electrodes to be established. When the electrodes are penetrated by the pre-stressed spring element, the electrodes directly contact each other or indirectly contact each other by the spring element. Preferably, the current path establishing device comprises one, two or a plurality of pre-stressed spring elements.

According to a further advantageous embodiment the current path establishing device comprises at least one pyrotechnical actuation device, when activated, acting on the pin-shaped element or the cutting device or the spring element. By activating the pyrotechnical actuation device, an explosion energy impacts on the pin-shaped element to displace and/or telescopably expand the pin-shaped element in the direction of the battery cell, more precisely in the direction of the electrodes of the battery cell. Alternatively or additively, by activating the pyrotechnical actuation device, an explosion energy impacts on the cutting device to displace at least one knife in the direction of the respective other knife. Alternatively or additively, by activating the pyrotechnical actuation device, an explosion energy impacts on a release mechanism for releasing the pre-stressed spring element.

According to a further advantageous embodiment the current path establishing device comprises at least one separator mountable between electrodes of the battery cell and being an electrical isolator when the current path establishing device is not activated, and being at least partly electrical conductive when the current path establishing device is activated. The separator may contain magnetic particles, which can be aligned with an external magnetic field to establish a plurality of additional current paths between electrodes of the battery cell. Through this, the separator is very uniformly heated, leading to an effective shut down of a battery cell having this shut down function.

According to a further advantageous embodiment the current path establishing device comprises at least one pressurization device and at least one expandable pressure chamber connected with said pressurization device, and the pressurization device, when the current path establishing device is activated, produces a pressurization gas expanding the expandable pressure chamber. The expandable pressure chamber is made from a flexible material, for example an elastic material, and needs minimal constructed space when it is not expanded. The expandable pressure chamber can be arranged inside or outside of the cell casing of a battery cell. The pressurization device can produce a compressed gas which is introduced in the expandable pressure chamber. By expanding the expandable pressure chamber, the pin-shaped element can be displaced or expanded in the direction of the electrodes of the battery cell, so that the pin-shaped element can penetrate or compress the electrodes to establish an additional current path between the electrodes. Alternatively or additively, by expanding the expandable pressure chamber, at least one knife of the cutting device can be displaced in the direction of the respective other knife, so that the electrodes of the battery cell are cut or compressed to establish an additional current path between the electrodes. Preferably, the current path establishing device comprises one, two or a plurality of expandable pressure chambers expandable by one or more pressurization devices. Each expandable pressure chamber may act like a finger part of a glove.

According to a further advantageous embodiment the pin-shaped element is fixed on the outer surface of the expandable pressure chamber facing electrodes of the battery cell. By expanding the pressure chamber, the pin-shaped element penetrates or compresses the electrodes of the battery cell to establish an additional current path between the electrodes. Preferably, the current path establishing device comprises one, two or a plurality of expandable pressure chambers each carrying a single pin-shaped element.

According to a further advantageous embodiment the current path establishing device comprises at least one bullet and at least one shooting device for shooting said bullet in the direction of the electrodes of the battery cell, when the current path establishing device is activated. The electrodes of the battery cell are penetrated or compressed by the impacting bullet to establish an additional current path between the electrodes. Preferably, the current path establishing device comprises one, two or a plurality of bullets and at least one shooting device for simultaneously shooting said bullets in the direction of the electrodes of the battery cell, when the current path establishing device is activated.

A rechargeable battery unit according to the invention of a hybrid electric vehicle or electric vehicle comprises at least one battery cell and at least one system according to any one of the foregoing embodiments or any combination of at least two of these embodiments with each other.

The above described advantages of the system correspond to advantages of the rechargeable battery unit. The rechargeable battery unit may comprise one or more battery cells. The rechargeable battery unit may be a complete rechargeable battery or a battery module or a battery pack of such a rechargeable battery. Preferably, the system comprises for each battery cell a separate current path establishing device.

According to an advantageous embodiment the current path establishing device is arranged inside or outside of the battery cell. In the former case, the current path establishing device must have chemical stability with respect to chemicals existent in the battery cell. The detection device may also be arranged inside or outside of the battery cell. In this case, the complete system may be arranged inside or outside of the battery cell. The system may be electrically connected with existing cell contacts of the battery cell to thereby activate the current path establishing device, if, for example, a cell voltage drops below a certain threshold, e.g. below 2 V, or has a predetermined voltage drop, e.g. 300 mV.

A method according to the invention for operating a rechargeable battery unit of a hybrid electric vehicle or electric vehicle, said rechargeable battery unit having at least one battery cell, comprises the steps of detecting, if a short circuit exists in the battery cell and/or if the vehicle has an accident at which the battery cell will be in the impact zone of the crash and/or if the battery cell is overcharged and/or if the battery cell is externally short circuited and/or if another failure cause able to lead to an unsafe situation of the battery cell exists, and establishing at least one additional current path between electrodes of the battery cells, when a short circuit does exist in the battery cell and/or when the vehicle does have an accident at which the battery cell will be in the impact zone of the crash and/or if the battery cell is overcharged and/or if the battery cell is externally short circuited and/or if another failure cause able to lead to an unsafe situation of the battery cell exists.

The above described advantages of the system correspond to advantages of the method. In particular, the system according to any one of the above described embodiments or a combination of at least two of these embodiments with each other may be used to perform the method.

According to an advantages embodiment the additional current path is established when a predetermined voltage drop, indicating that a short circuit does exist in the battery cell, of a cell voltage of the battery cell is detected. The above described advantages of the corresponding embodiment of the system correspondingly relate to this embodiment of the method.

According to a further advantageous embodiment the additional current path is established by pressing or at least partly penetrating the battery cell with at least one pin-shaped element or at least one bullet, or by cutting or compressing a part of the battery cell with at least one cutting device, or by switching a separator located between electrodes of the battery cell from an electrical non-conductive state in an at least partially electrical conductive state. The above described advantages of the corresponding embodiments of the system correspondingly relate to this embodiment of the method.

### Drawings

Further details, features and advantages of the invention are disclosed in the following description and the drawings showing:
- Figure 1: a circuit diagram of an embodiment of a system according to the present invention;
- Figure 2: a schematic diagram of a pin-shaped element of a further embodiment of a system according to the present invention; and
- Figure 3: a schematic diagram of a component of a current path establishing device of a further embodiment of a system according to the invention.

### Preferred embodiments of the invention

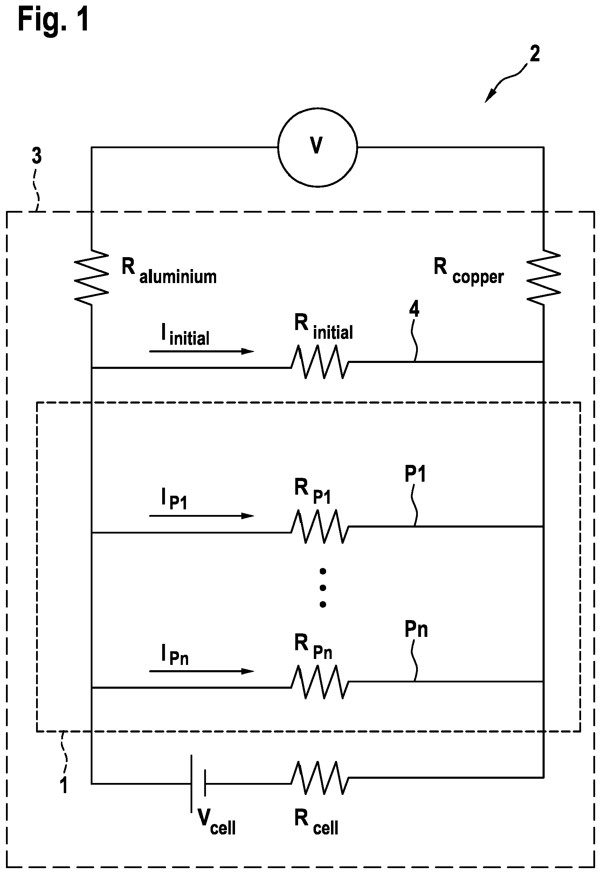

Figure 1 shows a circuit diagram of an embodiment of a system 1 according to the present invention for operating a rechargeable battery unit 2 of a hybrid electric vehicle or electric vehicle.

The rechargeable battery unit 2 has at least one battery cell 3, wherein only one battery cell 3 is shown in figure 1. The battery cell 3 generates the cell voltage V_{cell} and has the resistance R_{cell}. The battery cell 3 has an internal short circuit established by an initial current path 4 having a resistance Rᵢₙᵢₜᵢₐₗ. The initial current path 4 may be established by an object, for example a nail, penetrating the battery cell 3. A current Iᵢₙᵢₜᵢₐₗ flows through the initial current path 4 between electrodes of the battery cell 3, which are indicated by their respective resistances Rₐₗᵤₘᵢₙᵢᵤₘ and R_{copper}.

The system 1 comprises at least one current path establishing device (not shown), when activated, being capable of establishing n additional current paths between the electrodes of the battery cell 3 inside of the battery cell 3.

The current path establishing device may comprise pin-shaped elements (not shown) being pressed against or at least partly penetrating the battery cell 3 when the current path establishing device is activated. The pin-shaped elements each may be telescopable, so that a length of the respective pin-shaped element is greater when the current path establishing device is activated than that when the current path establishing device is not activated.

Alternatively or additively, the current path establishing device may comprise at least one cutting device (not shown) for cutting or compressing a part of at least one of the battery cell 3 when the current path establishing device is activated.

Alternatively or additively, the current path establishing device may comprise at least one pre-stressed spring element (not shown) having a spikey free end and being released when the current path establishing device is activated.

The current path establishing device may comprise at least one pyrotechnical actuation device (not shown), when activated, acting on the pin-shaped element or the cutting device or the spring element.

Alternatively or additively, the current path establishing device comprises at least one switchable separator (not shown) mountable between the electrodes of the battery cell 3 and being an electrical isolator when the current path establishing device is not activated, and being at least partly electrical conductive when the current path establishing device is activated.

Alternatively or additively, the current path establishing device may comprise at least one pressurization device (not shown) and at least one expandable pressure chamber (not shown) connected with said pressurization device, wherein the pressurization device, when the current path establishing device is activated, produces a pressurization gas expanding the expandable pressure chamber. The pin-shaped element may be fixed on the outer surface of the expandable pressure chamber facing the electrodes of the battery cell 3.

Alternatively or additively, the current path establishing device may comprise at least one bullet (not shown) and at least one shooting device (not shown) for shooting said bullet in the direction of the electrodes of the battery cell 3 when the current path establishing device is activated.

With the activated current path establishing device n additional current paths P1 to Pn are established between the electrodes of the battery cell 3. The first additional current path P1 has a resistance RP1. A current IP1 flows through the first current path P1, and so on. The overall short circuit current Imax(t) between the electrodes of the battery cell 3 is given by Iₘₐₓ(t) = Iᵢₙᵢₜᵢₐₗ(t) + I_{P1}(t) + ... + I_{Pn}(t).

The system 1 further comprises at least one detection unit (not shown) capable of detecting, if a short circuit exists in the battery cell 3 and/or if the vehicle has an accident at which the battery cell 3 will be in the impact zone of the crash and/or if the battery cell 3 is overcharged and/or if the battery cell 3 is externally short circuited, and of activating the current path establishing device upon detection that a short circuit does exist in the battery cell 3 and/or that the vehicle does have an accident at which the battery cell 3 will be in the impact zone of the crash and/or if the battery cell 3 is overcharged and/or if the battery cell 3 is externally short circuited. The detection device may be capable of monitoring the cell voltage of the battery cell 3 and is capable of activating the current path establishing device upon detection of a predetermined voltage drop, indicating that a short circuit does exist in the battery cell 3, of a cell voltage of the battery cell 3.

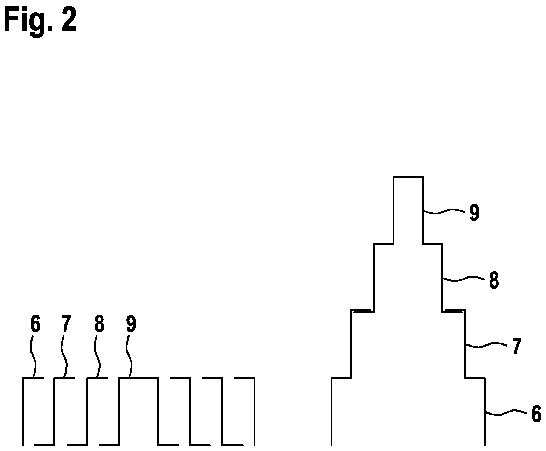

Figure 2 shows a schematic diagram of an embodiment of a pin-shaped element 5 according to a further embodiment of a system (not shown) according to the present invention. The pin-shaped element 5 is telescopable, so that a length of the pin-shaped element 5 is greater (shown on the right side in Figure 2) when the current path establishing device is activated than that when the current path establishing device is not activated (shown on the left side in Figure 2). The pin-shaped element 5 comprises four different and cylindrically formed components 6 to 8 being slidably guided relatively to each other to make the pin-shaped element 5 telescopable.

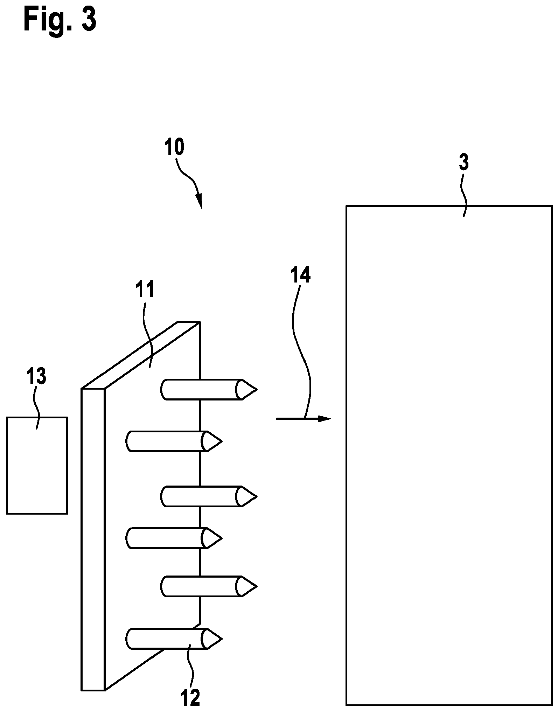

Figure 3 shows a schematic diagram of a component of a current path establishing device 10 of a further embodiment of a system (not shown further) according to the invention. The current path establishing device 10 comprises a thin plate 11 located inside or outside of a battery cell 3 of a rechargeable battery unit (not shown further). The plate 11 carries a plurality of pin-shaped elements 12 protruding from a surface of the plate 11 facing the battery cell 3. The current path establishing device 10 further comprises a pyrotechnical actuation device 13, inside or outside the cell, when activated, acting on the plate and therefore on the pin-shaped elements to displace the pin-shaped elements 12 according to the arrow 14 in the direction of the battery cell 3. By this, the pin-shaped elements 12 may compress or penetrate the battery cell 3 to establish a plurality of additional current paths between the electrodes (not shown) of the battery cell 3.

## Claims

1. A system (1) for operating a rechargeable battery unit (2) of a hybrid electric vehicle or electric vehicle, said rechargeable battery unit (2) having at least one battery cell (3), comprising:
- at least one current path establishing device (10), when activated, being capable of establishing at least one additional current path (P1,..., Pn) between electrodes of the battery cell (3) inside of this battery cell (3); and
- at least one detection unit capable of detecting, if a short circuit exists in the battery cell (3) and/or if the vehicle has an accident at which the battery cell (3) will be in the impact zone of the crash and/or if the battery cell (3) is overcharged and/or if the battery cell (3) is externally short circuited and/or if another failure cause able to lead to an unsafe situation of the battery cell (3) exists, and of activating the current path establishing device (10) upon detection that a short circuit does exist in the battery cell (3) and/or that the vehicle does have an accident at which the battery cell (3) will be in the impact zone of the crash and/or if the battery cell (3) is overcharged and/or if the battery cell (3) is externally short circuited and/or if another failure cause able to lead to an unsafe situation of the battery cell (3) exists.

2. The system (1) according to claim 1, wherein the detection device is capable of monitoring a cell voltage (V_{cell}) of the battery cell (3) and is capable of activating the current path establishing device (10) upon detection of a predetermined voltage drop, indicating that a short circuit does exist in the battery cell (3), of the cell voltage (Vcell) of the battery cell (3).

3. The system (1) according to claim 1 or 2, wherein the current path establishing device (10) comprises at least one pin-shaped element (5) being pressed against or at least partly penetrating at the battery cell (3) when the current path establishing device (10) is activated.

4. The system (1) according to claim 3, wherein the pin-shaped element (5) is telescopable, so that a length of the pin-shaped element (5) is greater when the current path establishing device (10) is activated than that when the current path establishing device (10) is not activated.

5. The system (1) according to any one of claims 1 to 4, wherein the current path establishing device comprises at least one cutting device for cutting or compressing a part of the battery cell (3) when the current path establishing device is activated.

6. The system (1) according to any one of claims 1 to 5, wherein the current path establishing device comprises at least one pre-stressed spring element having a spikey free end and being released when the current path establishing device is activated.

7. The system (1) according to any one of claims 3 to 5, wherein the current path establishing device (10) comprises at least one pyrotechnical actuation device (13), when activated, acting on the pin-shaped element (5) or the cutting device or the spring element.

8. The system (1) according to any one of claims 1 to 7, wherein the current path establishing device comprises at least one separator mountable between electrodes of the battery cell (3) and being an electrical isolator when the current path establishing device is not activated, and being at least partly electrical conductive when the current path establishing device is activated.

9. The system (1) according to any one of claims 1 to 8, wherein the current path establishing device comprises at least one pressurization device and at least one expandable pressure chamber connected with said pressurization device, and the pressurization device, when the current path establishing device is activated, produces a pressurization gas expanding the expandable pressure chamber.

10. The system (1) according to claim 9, wherein the pin-shaped element (5) is fixed on the outer surface of the expandable pressure chamber facing electrodes of the battery cell (3).

11. The system (1) according to any one of claims 1 to 10, wherein the current path establishing device comprises at least one bullet and at least one shooting device for shooting said bullet in the direction of the electrodes of the battery cell (3) when the current path establishing device is activated.

12. A rechargeable battery unit (2) of a hybrid electric vehicle or electric vehicle, having at least one battery cell (3), **characterized by** at least one system (1) according to any one of claims 1 to 11.

13. The rechargeable battery unit (2) according to claim 12, wherein the current path establishing device (10) is arranged inside or outside of the battery cell (3).

14. A method for operating a rechargeable battery unit (2) of a hybrid electric vehicle or electric vehicle, said rechargeable battery unit (2) having at least one battery cell (3), comprising the steps of:
detecting, if a short circuit exists in the battery cell (3) and/or if the vehicle has an accident at which the battery cell (3) will be in the impact zone of the crash and/or if the battery cell (3) is overcharged and/or if the battery cell (3) is externally short circuited and/or if another failure cause able to lead to an unsafe situation of the battery cell (3) exists; and
establishing at least one additional current path (P1,..., Pn) between electrodes of the battery cell (3) inside of this battery cell (3) when a short circuit does exist in the battery cell (3) and/or when the vehicle does have an accident at which the battery cell (3) will be in the impact zone of the crash and/or if the battery cell (3) is overcharged and/or if the battery cell (3) is externally short circuited and/or if another failure cause able to lead to an unsafe situation of the battery cell (3) exists.

15. The method according to claim 14, wherein the additional current path (P1,..., Pn) is established when a predetermined voltage drop, indicating that a short circuit does exist in the battery cell (3), of a cell voltage (V_{cell}) of the battery cell (3) is detected.

16. The method according to claim 14 or 15, wherein the additional current path (P1,..., Pn) is established by pressing or at least partly penetrating the battery cell (3) with at least one pin-shaped element (5) or at least one bullet, or by cutting or compressing a part of the battery cell (3) with at least one cutting device, or by switching a separator located between electrodes of the battery cell (3) from an electrical non-conductive state to an at least partially electrical conductive state.
